# EUROPÄISCHE PATENTSCHRIFT

(11) **EP 2 882 625 B1**
(45) Veröffentlichungstag und Bekanntmachung des Hinweises auf die Patenterteilung: **29.09.2021**
(21) Anmeldenummer: 13789151.1
(22) Anmeldetag: 09.08.2013
(51) Int. Cl.: B61D 19/02

(54) **TÜRFLÜGEL FÜR EIN FAHRZEUG, INSBESONDERE EIN SCHIENENFAHRZEUG**
DOOR LEAF FOR A VEHICLE, IN PARTICULAR A RAIL VEHICLE
BATTANT DE PORTE POUR VÉHICULE, EN PARTICULIER POUR VÉHICULE FERROVIAIRE

(30) Priorität: 13.08.2012 DE 102012107422
(43) Veröffentlichungstag der Anmeldung: 17.06.2015
(73) Patentinhaber: Knorr-Bremse Gesellschaft mit beschränkter Haftung, 2340 Mödling (AT)
(72) Erfinder: JETZINGER, Peter, A-3300 Amstetten (AT); HÖLZL, Gerald, A-3332 Biberbach (AT); WITZELNIG, Thomas, 3353 Biberbach (AT)
(74) Vertreter: Burger, Hannes
(86) Internationale Anmeldenummer: PCT/AT2013/050156
(87) Internationale Veröffentlichungsnummer: WO 2014/026211

(56) Entgegenhaltungen:
- EP-A1- 0 534 932
- EP-A1- 1 344 671
- AT-B- 412 271
- DE-U1- 8 533 980
- JP-A- 2001 146 163
- JP-A- 2007 303 112
- JP-A- 2007 303 112
- US-A- 4 372 603
- US-A1- 2005 073 171

## Beschreibung

Die vorliegende Erfindung bezieht sich auf einen Türflügel für ein Fahrzeug, insbesondere ein Schienenfahrzeug.

Die Erfindung betrifft den Rahmenaufbau eines Türflügels für Schienenfahrzeugbereich. Die derzeit verwendete Technologie für den Rahmenaufbau eines Türflügels für den Schienenfahrzeugbereich basiert auf einem Aluminium bzw. Stahl-Rahmen, der an der Außen- und Innenseite mit einem Metallblech beplankt ist. Aktuell besteht der Türflügel aus zwei Querprofilen, die oben und unten angeordnet sind, und zwei Längsprofilen, die die Hinterkante und die Vorderkante bilden, welche biegbar ausgeführt werden müssen. Aufgrund der steigenden Marktanforderungen aus dem Bereich Wärmedämmung und/oder Schalldämmung ist es notwendig, die tragende Rahmenkonstruktion thermisch zu entkoppeln.

In der AT 412 271 B wird ein Türflügel für ein Schienenfahrzeug, insbesondere einen Waggon, offenbart, welcher aus zumindest zwei lackierten Blechen aus einer Aluminiumlegierung besteht, die auf einem zwischen diesen Blechen angeordneten Türflügelrahmen montiert und mit diesem und/oder untereinander verklebt sind und zwischen sich eine Tasche bilden, die mit einem Wabenkörper und/oder einem geschäumten Material zumindest teilweise getollt ist. Die Erfindung ist dadurch gekennzeichnet, dass die Lackierung der Bleche zumindest eine Grundierung einer Einbrennlackierung ist, die vor dem Zuschneiden und Verformen der Bleche aufgebracht wurde.

Die EP 0 534 932 A1 offenbart einen Durchgang eines Waggons des schienengebundenen Personenverkehrs.

Das Gebrauchsmuster DE 8533980 U1 offenbart einen Rahmen für Türen oder Fenster, in dem eine Glasscheibe über eine mit dem die Rahmeninnenseite bildenden Rahmenteil verbundene Glasleiste gehalten ist.

Die JP 2001-146163 offenbart darüber hinaus eine Tür, welche einen Kern aus Aluminiumschaum aufweist, der auf der Vorder- und Rückseite mit Außenplatten verkleidet ist, wodurch eine Platte entsteht die zusätzlich mit einem Rahmen ausgestattet ist. Zum technischen Umfeld wird weiterhin auf die JP 2007 303112 A verwiesen.

Es ist die Aufgabe der vorliegenden Erfindung einen verbesserten Türflügel für ein Fahrzeug, insbesondere ein Schienenfahrzeug, zu schaffen.

Diese Aufgabe wird durch einen Türflügel für ein Fahrzeug, insbesondere ein Schienenfahrzeug gemäß dem Hauptanspruch gelöst. Vorteilhafte Ausgestaltungen ergeben sich aus den jeweiligen Unteransprüchen und der nachfolgenden Beschreibung.

Dementsprechend kann der Türflügelrahmen in der ersten Ausführungsvariante von zwei bindenden Ausführungsvarianten aus dem ersten Material ausgebildet sein. Ein Türflügelrahmen aus einem Material mit einer geringeren Wärmeleitfähigkeit als Metall, insbesondere einer geringeren Wärmeleitfähigkeit als ein Aluminium, kann den Wärmedurchfluss entlang des Wärmepfads durch den Türflügel verringern. Bei einem Türflügel mit einem Türflügelrahmen aus dem ersten Material kann die erste Schale thermisch und/oder akustisch von der zweiten Schale entkoppelt sein.

Gemäß der zweiten Ausführungsvariante der zwei bindenden Ausführungsvarianten weist das zumindest eine Profil des Türflügelrahmens aus der Gruppe oberes Querprofil, unteres Querprofil, Hinterkanten-Längsprofil und/oder Vorderkanten-Längsprofil zumindest einen Steg aus dem ersten Material auf, wobei der Steg zwischen zwei Profilteilen des zumindest einen Profils derart angeordnet ist, sodass die erste Schale gegenüber der zweiten Schale thermisch entkoppelt ist. Die erste Schale kann mit dem ersten der zumindest zwei Profilteilen und die zweite Schale mit dem zweiten der zumindest zwei Profilteilen verbunden sein. Die zwei Profilteile und der zwischen den beiden Profilteilen angeordnete Steg können ein Profil formen. Der Steg kann das erste Profilteil vom zweiten Profilteil akustisch und/oder thermisch entkoppeln. Mit dem zwischen den beiden Profilteilen angeordneten Steg kann das Profil als ein thermisch entkoppeltes Profil ausgebildet sein. Unter einem Profil kann ein Konstruktionsprofil verstanden werden. Ein Profil kann über seine gesamte Länge einen identischen Querschnitt aufweisen. Ein Profil kann über Längsnuten verfügen. In Längsnuten kann ein Nutenstein sowie Flächenmaterial eingebracht werden. Längsnuten können zur Aufnahme von Dichtungen dienen. Eine Querschnittsfläche eines Profils kann zumindest einen Schraubkanal aufweisen. Bei einem aus zumindest zwei Profilen aufgebauten Türflügelrahmen können die zumindest zwei Profile verschraubt, verschweißt und/oder geklemmt werden.

Dadurch, dass das obere Querprofil, das untere Querprofil, das Hinterkanten-Längsprofil und das Vorderkanten-Längsprofil für den Türflügelrahmen vorgesehen werden, kann eine sehr stabile Halterung für die erste und/oder zweite Schale realisiert werden.

Dieser Erfindung liegt der Gedanke zugrunde, eine thermische und akustische Entkopplung der Türaußenwand von der Türinnenwand, welche über eine tragende Rahmenkonstruktion verbunden sind, zu schaffen. Metalle weisen in der Regel eine gute Wärmeleitfähigkeit auf, auch die Ausbreitung von Körperschall kann in Metallen begünstigt werden. Der Durchgang von Wärme durch einen Türflügel kann durch den Einsatz von und/oder der Kombination mit Werkstoffen mit einer geringen Wärmeleitfähigkeit verringert werden. Mit den gleichen Werkstoffen ergibt sich im günstigen Fall auch eine Verbesserung der akustischen Entkopplung.

Vorteilhafterweise ist es möglich, dass durch eine Konstruktion eines Türflügels gemäß dem hier vorgestellten Ansatz neben einer hohen thermischen Isolationswirkung auch noch eine gute Isolationswirkung gegen die Übertragung von Schall ermöglicht ist. Dies ist insbesondere bei Türen von Schienenfahrzeugen vorteilhaft, die bei der Fahrt über freies Gelände, speziell im Winter teils einer sehr kalten Außenumgebung ausgesetzt sind und sich durch die guten thermischen Isolationseigenschaften Energiekosten für die Heizung des Fahrgastraumes sparen lassen. Zugleich können starke Fahrtgeräusche, die bei einer sehr schnellen Fahrt des Fahrzeugs an der Außenoberfläche entstehen, gut gegenüber einem Eindringen in den Fahrgastraum isoliert werden. Schließlich ist der hier vorgestellten Ansatz sehr kostengünstig, sodass die vorstehend beschriebenen Vorteile auf mit lediglich geringen Zusatzkosten erreicht werden können.

Die vorliegende Erfindung schafft einen Türflügel für ein Fahrzeug, insbesondere Schienenfahrzeug, wobei der Türflügel einen Türflügelrahmen, eine an einer ersten Hauptfläche des Türflügelrahmens angeordnete erste Schale und eine an einer der ersten Hauptfläche gegenüberliegenden zweiten Hauptfläche angeordnete zweite Schale aufweist, wobei der Türflügel derart ausgebildet ist, dass ein Wärmestrompfad von der ersten Schale zu der zweiten Schale durch zumindest zwei unterschiedliche Materialien erfolgt, wobei die zumindest zwei unterschiedlichen Materialien eine sich voneinander unterscheidende Wärmeleitfähigkeit aufweisen, wobei ein erstes Material der zumindest zwei unterschiedlichen Materialien eine schlechtere Wärmeleitfähigkeit als ein Metall, insbesondere eine schlechtere Wärmeleitfähigkeit als ein Aluminium, aufweist.

Bei dem Fahrzeug kann es sich um ein Schienenfahrzeug handeln. Unter einem Schienenfahrzeug kann im Allgemeinen ein spurgebundenes Fahrzeug verstanden werden, wie eine Lokomotive, ein Triebzug, ein Treibwagen, eine Straßenbahn, ein U-Bahnfahrzeug, ein Waggon wie ein Personen- bzw. Reisezug- und/oder Güterwagen. Das Schienenfahrzeug kann dabei in der Regel zumindest eine Tür mit zumindest einem Türflügel aufweisen. Ein Türflügel kann auch als Türblatt bezeichnet werden. Ein Türflügel kann einen Türflügelrahmen aufweisen, welcher mit zumindest einer Schale beplankt ist. Der Türflügelrahmen kann aus zumindest einem Profil aufgebaut sein. Unter einer Schale kann auch ein Blech, ein Außenblech, ein Innenblech, ein Metallblech, eine Glasscheibe und/oder ein Flächenmaterial verstanden werden. Ein Türflügel kann einen Wärmepfad (der auch als Wärmestromdurchgang bezeichnet werden kann) aufweisen. Unter einem Wärmepfad bzw. Wärmestromdurchgang kann ein Weg durch festes Material des Türflügels verstanden werden, der einen geringeren Wärmewiderstand aufweist, als ein anderer Weg, den Wärme durch den Türflügel nehmen kann; insbesondere kann unter dem Wärmepfad ein Weg durch den Türflügel verstanden werden, der den geringsten Wärmewiderstand von allen Wegen durch den Türflügel aufweist. Dabei wird im Wärmepfad keine Wärme durch thermische Strahlung übertragen, sondern insbesondere nur durch Wärmeleitung. Unter einem Wärmestrom kann ein Wärmefluss verstanden werden. Ein Wärmestrom kann eine physikalische Größe zur quantitativen Beschreibung von Wärmeübertragungsvorgängen sein. Der Wärmepfad/Wärmestromdurchgang des Türflügels kann von der Wärmeleitfähigkeit der Materialien des Türflügels beeinflusst werden. Bei einem Material mit einer geringeren Wärmeleitfähigkeit im Vergleich zu einem anderen Material findet ein geringerer Wärmestromdurchgang statt, als bei dem anderen Material.

In einer zusätzlichen Ausführungsform kann zwischen der ersten Schale und/oder der zweiten Schale und dem Türflügelrahmen eine Isolierschicht aus dem ersten Material angeordnet sein. Eine Isolierschicht kann eine thermische und/oder akustische Entkopplung bewirken. Eine Isolierschicht kann eine schlechtere Wärmeleitfähigkeit als ein Metall, insbesondere eine schlechtere Wärmeleitfähigkeit als ein Aluminium, aufweisen. Eine Isolierschicht kann einen Kunststoff und/oder einem Verbundwerkstoff aufweisen. Mittels einer zwischen der ersten Schale und/oder der zweiten Schale und dem Türflügelrahmen angeordneten Isolierschicht kann der Wärmedurchgang durch den Türflügel verringert werden, verglichen mit einem Türflügel ohne Isolierschicht. Die Isolierschicht kann die erste Schale und/oder die zweite Schale umschließen. In einer weiteren Ausführungsform kann die Isolierschicht nur im Bereich des Türflügelrahmens zwischen der ersten Schale und/oder der zweiten Schale angeordnet sein.

Gemäß einer Ausführungsform kann die erste Schale und/oder die zweite Schale mit einer dünnen Isolierschicht überzogen sein, wobei die dünne Isolierschicht aus dem ersten Material gebildet ist. Eine solche Ausführungsform der vorliegenden Erfindung bietet den Vorteil einer sehr einfachen Herstellung eines Wärmepfades mit den zwei Materialien mit dem unterschiedlichen Wärmeübertragungskoeffizienten. Auch eine Montage des Türflügels aus einem derartig aufgebauten Material ist technisch sehr einfach umsetzbar und somit kostengünstig.

Gemäß einer Ausführungsform kann das erste Material ein Kunststoff und/oder ein Verbundwerkstoff sein. Kunststoff und/oder ein Verbundwerkstoff wie beispielsweise Glasfaserkunststoff oder carbonfaserverstärkter Kunststoff kann eine geringere Wärmeleitfähigkeit als ein Metall, insbesondere ein Aluminium, aufweisen. Kunststoff und/oder Verbundwerkstoff kann als Isolierschicht eingesetzt werden. Zudem ist Kunststoff und/oder Verbindwerkstoff mittlerweile breit verfügbar und sowohl kostengünstig herstellbar als auch in seinen thermischen und schalltechnischen Eigenschaften flexibel gestaltbar, sodass das erste Material für die gewünschte Anwendung im Türflügel je nach Einsatzumgebung optimal ausgestaltet werden kann.

Auch ist es günstig, wenn in einer Ausführungsform in dem Türflügelrahmen zumindest eine Nut zur Aufnahme der ersten und/oder zweiten Schale und/oder eines Dichtelements ausgebildet ist. Nuten im Türflügelrahmen ermöglichen eine einfache mechanische Verbindung des Türflügelrahmens mit einer Schale und/oder einem Dichtelement. Unter einem Dichtelement kann unter anderem eine Dichtung aus Gummi und/oder Kautschuk verstanden werden. Günstig ist es auch, wenn in einem Ausführungsbeispiel zwischen der ersten Schale und der zweiten Schale ein Kernmaterial angeordnet ist, wobei das Kernmaterial eine schlechtere Wärmeleitfähigkeit als ein Metall, insbesondere eine schlechtere Wärmeleitfähigkeit als Aluminium, aufweist. Unter einem Kernmaterial kann ein Dämmstoff und/oder Isolationsmaterial verstanden werden. Das Kernmaterial kann geschäumt sein. In dem Kernmaterial kann zum Teil Luft eingeschlossen sein, wobei die Luft im Vergleich zu Festkörpern ein schlechter Wärmeleiter sein kann, und eine wärmedämmende Eigenschaft bewirken kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Türflügelrahmens gemäß einem Ausführungsbeispiel der vorliegenden Erfindung;
- Fig. 2A bis Fig. 6: Darstellungen von Ausführungsbeispielen von Profilen für den in Fig. 1 gezeigten Türflügelrahmen gemäß Ausführungsbeispielen der vorliegenden Erfindung;
- Fig. 7: eine schematische Darstellung eines Türflügelrahmens 100 gemäß einem Ausführungsbeispiel der vorliegenden Erfindung; und

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

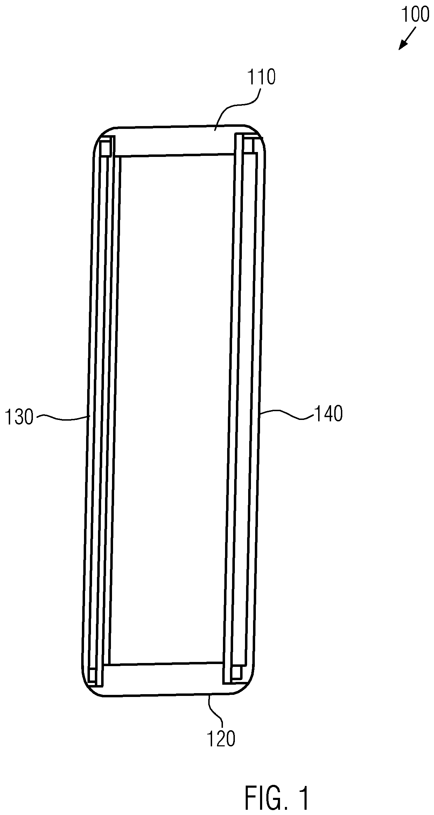

Fig. 1 zeigt eine schematische Darstellung eines Türflügelrahmens 100 gemäß einem Ausführungsbeispiel der vorliegenden Erfindung. Der Türflügelrahmen 100 weist ein oberes Querprofil 110 und ein unteres Querprofil 120 sowie ein Hinterkanten-Längsprofil 130 und ein Vorderkanten-Längsprofil 140 auf. Die vier Profile weisen eine Haupterstreckungsrichtung auf und sind an den Enden jeweils miteinander verbunden. Dabei ist das obere Querprofil 110 mit dem Hinterkanten-Längsprofil 130 und dem Vorderkanten-Längsprofil 140 verbunden.

An den der Verbindung mit dem oberen Querprofil gegenüberliegenden Enden des Hinterkanten-Längsprofils 130 und des Vorderkanten-Längsprofils 140 ist das untere Querprofil 120 mit dem Hinterkanten-Längsprofil 130 und dem Vorderkanten-Längsprofil 140 verbunden.

Dabei ist das obere Querprofil 110 parallel zu dem unteren Querprofil 120 angeordnet. Das Hinterkanten-Längsprofil 130 ist parallel zu dem Vorderkanten-Längsprofil 140 angeordnet.

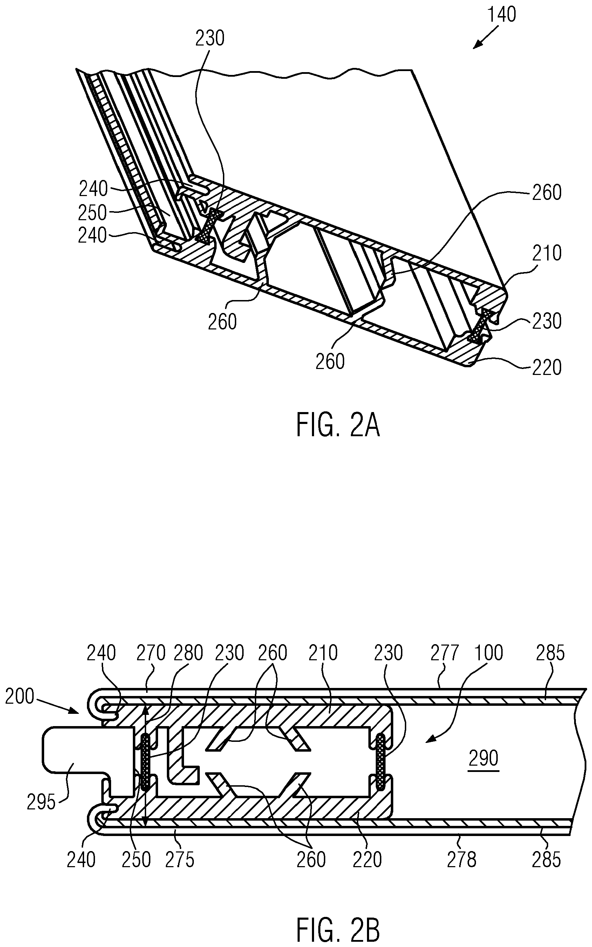

Fig. 2A bis Fig. 7 zeigen Darstellungen von Ausführungsbeispielen von Profilen 110, 120, 130, 140 für den in Fig. 1 gezeigten Türflügelrahmen 100 gemäß Ausführungsbeispielen der vorliegenden Erfindung.

Fig. 2A zeigt eine schematische Darstellung eines Profilquerschnitts eines Längsprofils gemäß einem Ausführungsbeispiel der vorliegenden Erfindung. Bei dem in Fig. 2A gezeigten Längsprofil 140 handelt es sich um das in Fig. 1 gezeigte Vorderkanten-Längsprofil 140. Das Vorderkanten-Längsprofil 140 weist ein erstes Profilteil 210 und ein zweites Profilteil 220 auf, welche durch zwei Stege 230 miteinander verbunden sind. Sowohl das erste Profilteil 210 als auch das zweite Profilteil 220 weisen Nuten 240 auf. Die Nuten 240 sind ausgebildet, ein Blech und/oder eine Schale aufzunehmen und zu halten. Das erste Profilteil 210 und das zweite Profilteil 220 sind derart ausgebildet und zueinander angeordnet, dass eine Nut 250 zur Aufnahme eines Dichtungsmittels parallel zur Haupterstreckungsrichtung des Vorderkanten-Längsprofils 240 und parallel zu den Nuten 240 sich zwischen den beiden Profilteilen 210, 220 bildet. Die Profilteile 210, 220 weisen auf den einander zugewandten Seiten Rippen 260 auf, welche die Steifigkeit des Profilteils 210, 220 erhöhen und weitere Nuten schaffen. Zur Erhöhung des Widerstandsmomentes ist im Verhältnis zur Gesamtmaterialmenge viel Material am Rand der Geometrie angeordnet. In einem weiteren nicht gezeigten Ausführungsbeispiel weist die Querschnittsfläche des Längsprofils 140 einen Schraubkanal auf.

In einem Ausführungsbeispiel ist der Steg 230 aus Kunststoff ausgeführt. Hierdurch wird eine Entkopplung von Wärme und Schall der zwei Profilteile 210, 220 über den Kunststoffsteg 230 geschaffen.

Fig. 2B zeigt eine Schnittdarstellung eines Türflügels 200 mit einem Ausführungsbeispiel eines Türflügelrahmens 100 gemäß der Darstellung aus Fig. 2A. In der Fig. 2B ist neben den Türflügelrahmen 100 eine erste Schale 270, die gemäß der Darstellung aus Fig. 2B auch in der Form eines flachen (beispielsweise Aluminium-) Blechs ausgebildet ist, und eine zweite Schale 275 erkennbar, die gemäß der Darstellung aus Fig. 2B ebenfalls in der Form eines flachen (beispielsweise Aluminium-) Blechs ausgebildet ist. Die erste Schale 270 ist in der Nut 240 des ersten Profilteils 210 eingehängt und erstreckt sich nach einer Biegung über das erste Profilteil 210 hinweg, um eine erste Hauptfläche 277 des Türflügels zu bilden. Diese erste Hauptfläche 277 kann beispielsweise im verbauten Zustand des Türflügels 200 eine Außenfläche des Türflügels 200 bzw. einer Außenseite des Schienenfahrzeugs zugewandt sein. Analog ist die zweite Schale 275 in der Nut 240 des zweiten Profilteils 220 eingehängt und erstreckt sich nach einer Biegung über das zweite Profilteil 220 hinweg, um eine zweite Hautfläche 278 des Türflügels 200 zu bilden, die beispielsweise im eingebauten Zustand des Türflügels 200 in das (Schienen-)Fahrzeug bzw. den Fahrgastraum weisen kann. Auf diese Weise wird ein Wärmepfad 280 ausgebildet, der von der ersten Hauptfläche 277 (die beispielsweise einer kalten Temperatur ausgesetzt ist), über das erste Profilteil 210 (beispielsweise aus Aluminium), den Steg 230 (beispielsweise aus Kunststoffmaterial), das zweite Profilteil 220 (beispielsweise ebenfalls wieder aus Aluminium) sowie die zweite Schale 278 führt. Durch die Verwendung von unterschiedlichen Materialien mit unterschiedlichen Wärmeleitfähigkeiten in dem Wärmepfad 280, der einen Wärmestrom von der ersten Hauptfläche 277 zur zweiten Hauptfläche 278 ermöglicht, lässt sich somit eine vorteilhafte thermische Isolation zwischen der ersten Hauptfläche 277 und der zweiten Hauptfläche 278 erzielen. Auch durch die unterschiedlichen akustischen Leitfähigkeiten der unterschiedlichen Materialien im Wärmepfad 280, die entsprechend dem in Fig. 2B dargestellten Ausführungsbeispiel Aluminium in dem ersten Profilteil 210 und dem zweiten Profilteil 220 mit einem dazwischenliegenden Steg 230 aus Kunststoff ausgestaltet sind, lässt sich eine optimale akustische Isolation zwischen der ersten Hauptfläche 277 und der zweiten Hauptfläche 278 erreichen. Um eine weitere Optimierung der thermischen und akustischen Isolation zu erreichen, kann auch die erste Schale 270 und/oder die zweite Schale 275 einseitig (wie in der Fig. 2B dargestellt) oder beidseitig mit einer Schutzschicht bzw. Isolationsschicht 285 überzogen sein, die ebenfalls ein anderes Material als das erste und/oder zweite Profilteil 210 bzw. 220, der Steg 230 oder die erste oder zweite Schale 270 bzw. 275 aufweist. Alternativ oder zusätzlich kann die erste und/oder zweite Schale 270 bzw. 275 auch aus Kunststoff und/oder Verbundwerkstoff wie beispielsweise Karbonfasermaterial bestehen oder dieses Material aufweisen. Auch können das erste Profilteil 210 Teil der ersten Schale 270 und/oder das zweite Profilteil 220 Teil der zweiten Schale 275 sein. Denkbar ist ferner, dass auch in einem Bereich zwischen der ersten und zweiten Schale 270 bzw. 275 ein Kernmaterial 290, welches auch als Isolationsmaterial 290 bezeichnet werden kann, (speziell mit günstigen Eigenschaften in Bezug auf eine akustische und thermische Entkopplung der ersten und zweiten Hauptfläche) wie beispielsweise PolyurethanSchaum enthalten sein. In die seitliche Nut 250 des Türrahmens 100 kann beispielsweise ein Dichtelement 295 eingebettet sein, welches ein dichtes Verschließen der Türe 200 im verbauten Zustand und bei der Fahrt des Fahrzeugs ermöglicht. Ebenso kann dieses Dichtelement 295 auch noch einen Fingerschutz sicherstellen, der bewirkt, dass beim Schließen der Türe 200 kein Insasse des Fahrzeugs zu Schaden kommt, insbesondere keine Quetschung eines Fingers erleidet.

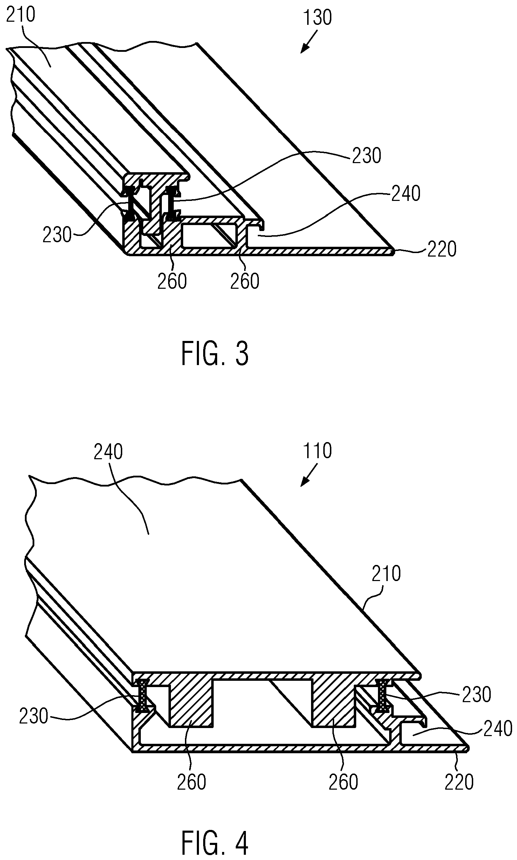

Bei den folgenden Figuren 3 bis 7 handelt es sich wie bereits beschrieben um unterschiedliche Ausführungsbeispiele und Ansichten von Profilen 110, 120, 130, 140 des in Fig. 1 gezeigten Türflügelrahmens 100. Gezeigt werden in den Figuren 2 bis 13 ein oberes Querprofil 110, ein unteres Querprofil 120, ein Hinterkanten-Längsprofil 130 sowie ein Vorderkanten-Längsprofil 140. Den Profilen 110, 120, 130, 140 ist bei den gezeigten Ausführungsbeispielen gemein, dass sie aus zwei Profilteilen 210, 220 aufgebaut sind, die über zwei Stege 230 miteinander verbunden sind. Die Profilteile 210 220 weisen auf den einander zugewandten Seiten Rippen 260 auf. Die Rippen 260 erhöhen die Steifigkeit der Profilteile 210, 220. Die Rippen 260 sind Vorsprünge des Profils 110, 120, 130, 140, die sich in der Haupterstreckungsrichtung über das Profil erstrecken. Eine Rippe 260 eines Profilteils 210, 220 kann bei einzelnen Ausführungsbeispielen derart angeordnet und ausgeformt sein, dass die Rippe 260 zwischen zwei Rippen des gegenüber angeordneten Profilteils 220, 210 eingreift, um ein seitliches Verschieben mechanisch zu verhindern. Weiterhin schaffen die Rippen 260 Nuten 240. Je nach Ausführungsbeispiel können die Profilteile 210, 220 derart angeordnet sein, dass zwischen den beiden Profilteilen 210, 220 zumindest eine weitere Nut 250 entsteht. In weiteren nicht gezeigten Ausführungsbeispielen weisen die Querschnittsflächen der Profile 110, 120, 130, zumindest einen Schraubkanal auf.

Ein Aspekt der Erfindung ist somit die Verwendung thermisch getrennter Profile für die Rahmenkonstruktion von Einstiegstüren für Schienenfahrzeuge. Durch die Profile wird eine wärmetechnische/thermische Entkopplung des Außenblechs zum Innenblech erreicht. In einem Ausführungsbeispiel wird die Entkopplung mit Kunststoffstegen ausgeführt.

Fig. 3 zeigt eine schematische Darstellung eines Profilquerschnitts eines Profils eines Türflügelrahmens gemäß einem Ausführungsbeispiel der vorliegenden Erfindung. Bei dem Profil 130 handelt es sich entsprechend des in Fig. 1 gezeigten Türflügelrahmens 100 um ein Hinterkanten-Längsprofil 130. Das Hinterkanten-Längsprofil 130 weist ein erstes Profilteil 210 und ein zweites Profilteil 220 auf. Die beiden Profilteile 210, 220 sind durch zwei Stege 230 miteinander verbunden. Die Profilteile 210, 220 weisen Rippen 260 auf, die die Steifigkeit des Profilteils 210, 220 beziehungsweise des Profils 130 erhöhen sowie Nuten 240 schaffen. Die Breite des einen Profilteils 210 beträgt nur ca. ein Drittel der Breite des anderen Profilteils 220.

Fig. 4 zeigt eine schematische Darstellung eines Profilquerschnitts eines Profils eines Türflügelrahmens gemäß einem Ausführungsbeispiel der vorliegenden Erfindung. Bei dem Profil 110 handelt es sich um das in Fig. 1 bereits gezeigte obere Querprofil 110. Das in Fig. 4 gezeigte obere Querprofil 110 ist ein thermisch getrenntes Profil 110.

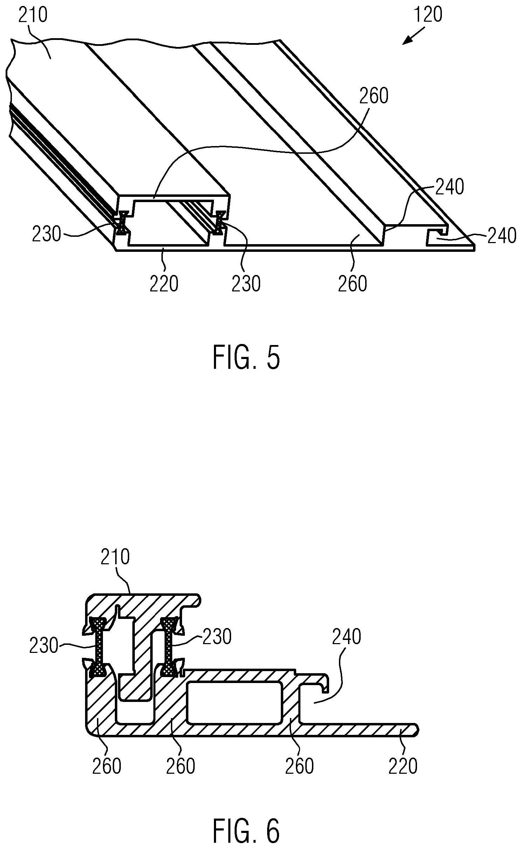

Fig. 5 zeigt eine schematische Darstellung eines Profilquerschnitts eines Profils eines Türflügelrahmens gemäß einem Ausführungsbeispiel der vorliegenden Erfindung. Fig. 5 ähnelt Fig. 4, mit dem Unterschied, dass es sich bei dem Profil 120 um das in Fig. 5 bereits gezeigte untere Querprofil 120 handelt. Das in Fig. 5 gezeigte untere Querprofil 120 ist ein thermisch getrenntes Profil 120..

Fig. 6 zeigt eine schematische Darstellung eines Profilquerschnitts eines Profils eines Türflügelrahmens gemäß einem Ausführungsbeispiel der vorliegenden Erfindung. Gezeigt wird ein Ausführungsbeispiel eines Hinterkanten-Längsprofils 130 entsprechend des in Fig. 1 gezeigten Türflügelrahmens 100. Fig. 6 zeigt einen Profilquerschnitt,

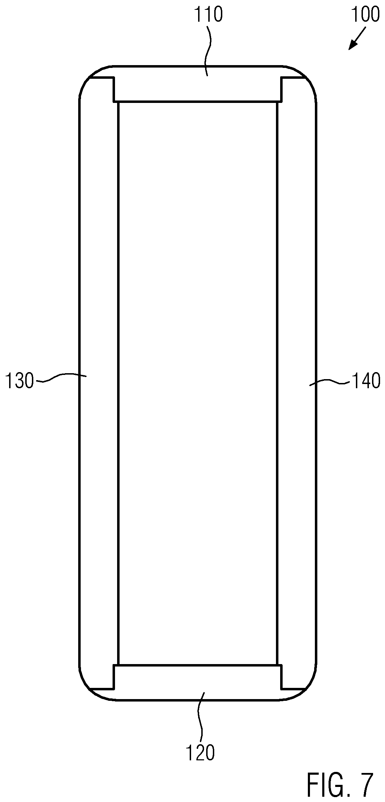

Fig. 7 zeigt eine schematische Darstellung eines Türflügelrahmens 100 gemäß einem Ausführungsbeispiel der vorliegenden Erfindung. Der Türflügelrahmen 100 wird gebildet von einem oberen Querprofil 110, einem unteren Querprofil 120, einem Hinterkanten-Längsprofil 130 sowie einem Vorderkanten-Längsprofil 140. Das obere Querprofil 110 und das untere Querprofil 120 sind parallel zueinander angeordnet. Das Hinterkanten-Längsprofil 130 sowie das Vorderkanten-Längsprofil 140 sind parallel zueinander angeordnet. Das obere Querprofil 110 ist mit dem Hinterkanten-Längsprofil 130 sowie dem Vorderkanten-Längsprofil 140 verbunden. Das untere Querprofil 120 ist mit dem Hinterkanten Längsprofil 130 sowie dem Vorderkanten Längsprofil 140 verbunden. Die vier Profile 110, 120, 130, 140 ergeben zusammen im Wesentlichen ein Rechteck. In einem Ausführungsbeispiel handelt es sich bei den Profilen 110, 120, 130, 140 um thermisch entkoppelt Profile 110, 120, 130, 140. In einem weiteren Ausführungsbeispiel handelt es sich bei den Profilen 110, 120, 130, 140 um Profile aus einem Kunststoff und/oder Verbundwerkstoff.

In einem Ausführungsbeispiel wird der Türflügelrahmen nicht direkt mit einem Blech und/oder einer Schale beplankt, sondern vielmehr zwischen dem metallischen Blech ist eine zusätzliche Isolationsschicht angebracht. Die Isolationsschicht schafft eine thermische Entkopplung der Tür. In einem Ausführungsbeispiel ist die Isolationsschicht als eine Kunststoffplatte ausgeführt. Bei diesem Ausführungsbeispiel ist der Türflügelrahmen aus AluminiumProfilen aufgebaut.

In einem weiteren Ausführungsbeispiel werden anstelle der wärmetechnisch gut leitenden Aluminium-Profile, Profile mit einem schlechteren Wärmedurchgangskoeffizienten verwendet (z. B. Kunststoffprofile, dabei müssen die Profile biegbar sein beziehungsweise Brandschutzanforderungen erfüllen.

In einem weiteren Ausführungsbeispiel ist die auf dem Türflügelrahmen angeordnete Schale mit einer zusätzlichen Schale ausgestattet, wobei die zusätzliche Schale einen schlechteren Wärmedurchgangskoeffizienten als die Schale und/oder der Türflügelrahmen aufweist. Die Metall-Bleche werden mit einer Schale mit einem schlechteren Wärmedurchgangskoeffizienten ausgestattet (wie beispielsweise eine Kunststoffplatte, GFK-Platte, CFK-Platte, ...), wobei diese Platte zusätzlich zur Wärmedämmung die Funktion des Bleches übernimmt (Lackierung, Festigkeit, ...).

Die beschriebenen Ausführungsbeispiele sind nur beispielhaft gewählt und können miteinander kombiniert werden.

### Bezugszeichenaufstellung

- 100: Türflügelrahmen
- 110: oberes Querprofil
- 120: unteres Querprofil
- 130: Hinterkanten-Längsprofil
- 140: Vorderkanten-Längsprofil
- 200: Türflügel/Tür
- 210: Profilteil
- 220: Profilteil
- 230: Steg
- 240: Nut
- 250: Nut
- 260: Rippe
- 270: erste Schale
- 275: zweite Schale
- 277: erste Hauptfläche (des Türflügels)
- 278: zweite Hauptfläche (des Türflügels)
- 280: Wärmepfad
- 285: Isolationsschicht
- 290: Kernmaterial/Isolationsmaterial
- 295: Dichtelement
- 1510: Schraube

## Patentansprüche

1. Türflügel (200) für ein Fahrzeug, insbesondere ein Schienenfahrzeug, wobei der Türflügel (200) einen Türflügelrahmen (100), eine an einer ersten Hauptfläche (277) des Türflügelrahmens (100) angeordnete erste Schale (270) und eine an einer der ersten Hauptfläche (277) gegenüberliegenden zweiten Hauptfläche (278) angeordnete zweite Schale (275) aufweist, wobei der Türflügelrahmen (100) ein oberes Querprofil (110) und ein unteres Querprofil (120) sowie ein Hinterkanten-Längsprofil (130) und ein Vorderkanten-Längsprofil (140) aufweist, wobei das obere Querprofil 110 mit dem Hinterkanten-Längsprofil 130 sowie dem Vorderkanten-Längsprofil 140 verbunden ist und das untere Querprofil 120 mit dem Hinterkanten Längsprofil 130 sowie dem Vorderkanten Längsprofil 140 verbunden ist und wobei der Türflügel (200) derart ausgebildet ist, dass ein Wärmepfad (280) von der ersten Schale (270) zu der zweiten Schale (275) durch zumindest zwei unterschiedliche Materialien erfolgt, wobei die zumindest zwei unterschiedlichen Materialien eine sich voneinander unterscheidende Wärmeleitfähigkeit aufweisen, wobei ein erstes Material der zumindest zwei unterschiedlichen Materialien eine schlechtere Wärmeleitfähigkeit als ein Metall, insbesondere eine schlechtere Wärmeleitfähigkeit als Aluminium, aufweist,
**dadurch gekennzeichnet, dass**
- der Türflügelrahmen (100) aus dem ersten Material ausgebildet ist oder
- zumindest ein Profil (110, 120, 130, 140) aus der Gruppe oberes Querprofil (110), unteres Querprofil (120), Hinterkanten-Längsprofil (130) und/oder Vorderkanten-Längsprofil (140) zumindest einen Steg (230) aus dem ersten Material aufweist, wobei der Steg (230) zwischen zwei Profilteilen (210, 220) des zumindest einen Profils (110, 120, 130, 140) derart angeordnet ist, sodass die erste Schale (270) gegenüber der zweiten Schale (275) thermisch entkoppelt ist.

2. Türflügel (200) gemäß Anspruch 1, bei dem zwischen der ersten Schale (270) und/oder der zweiten Schale (275) und dem Türflügelrahmen (100) eine Isolierschicht (285) aus dem ersten Material angeordnet ist.

3. Türflügel (200) gemäß einem der vorangegangenen Ansprüche, bei dem die erste Schale (270) und/oder die zweite Schale (275) mit einer dünnen Isolierschicht (285) überzogen ist, wobei die dünne Isolierschicht (285) aus dem ersten Material gebildet ist.

4. Türflügel (200) gemäß Anspruch 1 oder 2, bei dem das erste Material ein Kunststoff und/oder ein Verbundwerkstoff ist.

5. Türflügel (200) gemäß einem der vorangegangenen Ansprüche, bei dem in dem Türflügelrahmen (100) zumindest eine Nut (240, 250) zur Aufnahme der ersten Schale (270) und/oder zweiten Schale (275) und/oder eines Dichtelements (295) ausgebildet ist.

6. Türflügel (200) gemäß einem der vorangegangenen Ansprüche, bei dem zwischen der ersten Schale (270) und der zweiten Schale (275) ein Kernmaterial (290) angeordnet ist, wobei das Kernmaterial (290) eine schlechtere Wärmeleitfähigkeit als ein Metall, insbesondere eine schlechtere Wärmeleitfähigkeit als Aluminium, aufweist.

## Claims

1. A door leaf (200) for a vehicle, in particular a rail vehicle, the door leaf (200) having a door-leaf frame (100), a first skin (270) arranged on a first main surface (277) of the door-leaf frame (100) and a second skin (275) arranged on a second main surface (278) opposite the first main surface (277), the door-leaf frame (100) having an upper transverse profile (110) and a lower transverse profile (120) and a rear-edge longitudinal profile (130) and a front-edge longitudinal prolife (140), the upper transverse profile (110) being connected to the rear-edge longitudinal profile (130) and the front-edge longitudinal prolife (140), and the lower transverse profile (120) being connected to the rear-edge longitudinal profile (130) and the front-edge longitudinal prolife (140), and the door leaf (200) being designed such that a heat path (280) runs through at least two different materials from the first skin (270) to the second skin (275), these at least two different materials having different thermal conductivities, a first of the at least two different materials having a poorer thermal conductivity than a metal, in particular a poorer thermal conductivity than aluminium,
**characterised in that**
- the door-leaf frame (100) is made of the first material or
- at least one profile (110, 120, 130, 140) from the group comprising the upper transverse profile (110), the lower transverse profile (120), the rear-edge longitudinal profile (130) and/or the front-edge longitudinal prolife (140) has at least one web (230) made of the first material, the web (230) being arranged between two profile parts (210, 220) of the at least one profile (110, 120, 130, 140) such that the first skin (270) is thermally decoupled from the second skin (275).

2. A door leaf (200) according to claim 1, in which an insulating layer (285) of the first material is arranged between the first skin (270) and/or the second skin (275) and the door-leaf frame (100).

3. A door leaf (200) according to any one of the preceding claims, in which the first skin (270) and/or the second skin (275) is coated with a thin insulating layer (285), this thin insulating layer (285) being made of the first material.

4. A door leaf (200) according to claim 1 or 2, in which the first material is a plastic and/or a composite material.

5. A door leaf (200) according to any one of the preceding claims, in which at least one groove (240, 250) for receiving the first skin (270) and/or the second skin (275) and/or a sealing element (295) is formed in the door-leaf frame (100).

6. A door leaf (200) according to any one of the preceding claims, in which a core material (290) is arranged between the first skin (270) and the second skin (275), this core material (290) having a poorer thermal conductivity than a metal, in particular a poorer thermal conductivity than aluminium.

## Revendications

1. Battant (200) de porte d'un véhicule, notamment d'un véhicule ferroviaire, dans lequel le battant (200) de porte à un cadre (100) de battant de porte, une première coque (270) disposée sur une première surface (277) principale du cadre (200)de battant de porte et une deuxième coque (275) disposée sur une deuxième surface (278) principale opposée à la première surface (277) principale, dans lequel le cadre (100) de battant de porte a un profilé (110) transversal supérieur et un profilé (120) transversal inférieur, ainsi qu'un profilé (130) longitudinal de bord arrière et un profilé (140) longitudinal de bord avant, dans lequel le profilé (110) transversal supérieur est relié au profilé (130) longitudinal de bord arrière ainsi qu'au profilé (140) longitudinal de bord avant et le profilé (120) transversal inférieur est relié au profilé (130) longitudinal de bord arrière ainsi qu'au profilé (140) longitudinal de bord avant, et dans lequel le battant (200) de porte est constitué de manière à donner un trajet (280) de la chaleur de la première coque (270) à la deuxième coque (275), en passant par au moins deux matériaux différents, dans lequel les au moins deux matériaux différents ont une conductibilité de la chaleur différentes l'un de l'autre, dans lequel un premier matériau des au moins deux matériaux différents a une conductibilité de la chaleur plus mauvaise qu'un métal, notamment une conductibilité de la chaleur plus mauvaise que l'aluminium,
**caractérisé en ce que**
- le cadre (100) de battant de porte est constitué en le premier matériau ou
- au moins un profilé (110, 120, 130, 140) dans le groupe du profilé (110) transversal supérieur, du profilé (120) transversal inférieur, du profilé (130) longitudinal de bord arrière et/ou du profilé (140) longitudinal de bord avant a au moins une entretoise (230) en le premier matériau, dans lequel l'entretoise (230) est disposée entre deux parties (210, 220) du au moins un profilé (110, 120, 130, 140) de manière à découpler thermiquement la première coque (270) de la deuxième coque (275).

2. Battant (200) de porte suivant la revendication 1, dans lequel une couche (285) isolante en le premier matériau est disposée entre la première coque (270) et/ou la deuxième coque (275) et le cadre (100) de battant de porte.

3. Battant (200) de porte suivant l'une des revendications précédentes, dans lequel la première coque (270) et/ou la deuxième coque (275) est revêtue d'une mince couche (285) isolante, la mince couche (285) isolante étant en le premier matériau.

4. Battant (200) de porte suivant la revendication 1 ou 2, dans lequel le premier matériau est une matière plastique et/ou un matériau composite.

5. Battant (200) de porte suivant l'une des revendications précédentes, dans lequel dans le cadre (100) de battant de porte est constitué au moins une rainure (240, 250) de réception de la première coque (270) et/ou de la deuxième coque (275) et/ou d'un élément (295) d'étanchéité.

6. Battant (200) de porte suivant l'une des revendications précédentes, dans lequel un matériau (290) de cœur est disposé entre la première coque (270) et la deuxième coque (275), le matériau (290) de cœur ayant une conductibilité de la chaleur plus mauvaise qu'un métal, notamment une conductibilité de la chaleur plus mauvaise que l'aluminium.
